# EUROPEAN PATENT SPECIFICATION

(11) **EP 0 653 883 B1**
(45) Date of publication and mention of the grant of the patent: **20.01.1999**
(21) Application number: 94118033.3
(22) Date of filing: 15.11.1994
(51) Int. Cl.: H04N 5/765

(54) **Video system having a plurality of separable modules**
Videosystem mit einer Mehrzahl von trennbaren Einheiten
Système vidéo constitué d'une pluralité de modules séparables

(30) Priority: 16.11.1993 KR 9324382
(43) Date of publication of application: 17.05.1995
(73) Proprietor: DAEWOO ELECTRONICS CO., LTD, Jung-Gu, Seoul 100-095 (KR)
(72) Inventor: Kim, Keum-Mo, Seoul (KR)
(74) Representative: von Samson-Himmelstjerna, Friedrich R., Dipl.-Phys.

(56) References cited:
- US-A- 4 507 689
- US-A- 5 170 262
- US-A- 5 170 295
- HITACHI REVIEW, vol. 41, no. 2, May 1992 TOKYO JP, pages 97-102, TAGUCHI 'video cassette recorder technology trends as supported by microcontrollers'

## Description

### Field of the Invention

The present invention relates to a video system; and, more particularly, to a video system having a plurality of separable modules.

### Description of the Prior Art

Video systems may be grouped into home use equipment and portables. The home use equipment may be employed to record and/or reproduce a television program received through its built-in type tuner, while the portable system is intended to record, e. g., an image photographed by its built-in camera. A battery is normally furnished to power the portable apparatus.

U. S. Patent No. US-A-4,899,231 issued to Masaya Maeda et al. discloses a portable video system, having a reduced size and weight, comprising a recording device such as a video tape recorder, a video camera as a signal source and a reproduction unit, which are separable each other as independent modules. The recording device is combined with the video camera for the purpose of recording an image obtained through the video camera and combined with the reproduction unit for the reproduction of the recorded image.

The portable video system, however, has a complicated construction since the recording device and the reproducing unit have their corresponding signal processing units. Further, the recording device should always be carried by an user even if no recording function achieved by the recording device is necessary because a source signal generated from the video camera passes through the recording device.

### Summary of the Invention

It is, therefore, a primary object of the invention to provide a video system having a plurality of separable modules and a signal processing module which is designed to centrally process signals from and to the separable modules.

In accordance with the present invention, there is provided a video system which comprises a main body having a signal processing section, a signal recording/reproducing section and a coupling device, and a plurality of independent modules which can all at the same time be separably engaged with the main body through the use of the coupling device, said modules including a camera module for providing a camera video signal to the signal processing section, a tuner module for providing a broadcast signal to the signal processing section, a computer interface module for providing a digital data signal to the signal processing section and a display module for displaying the output signal provided from the signal processing section, wherein the signal processing section includes a system controller, a coupling sensing device connected to the system controller for detecting the connection status of each of the modules to the main body, and a digital signal processor connected to the system controller for processing an input signal provided to the signal processing section in a digital format.

### Brief Description of the Drawings

The above and other objects and features of the present invention will become apparent from the following description of preferred embodiments taken in conjunction with the accompanying drawings, in which:
FIG. 1 shows a schematic block diagram of a video system in accordance with the invention;
FIG. 2 illustrates a block diagram of the camera module shown in FIG. 1;
FIG. 3 represents a block diagram of the display or monitor module shown in FIG. 1;
FIG. 4 provides a block diagram of the tuner module shown in FIG. 1; and
FIG. 5 presents a block diagram of the computer interface module shown in FIG. 1.

### Detailed Description of the Preferred Embodiments

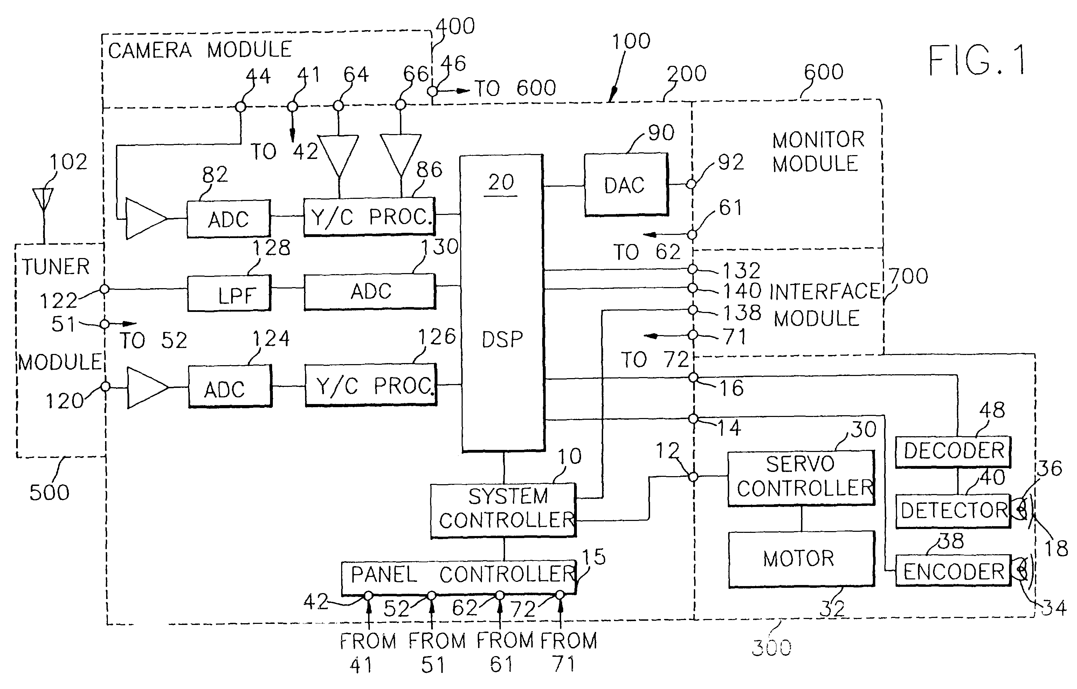

Referring to FIG. 1, there is shown a block diagram of a video system having a main body 100 together with separable modules including a camera module 400, a tuner module 500, a display or monitor module 600 and an external digital signal processing system interface module 700, which are independent from the main body 100 and integrally formed as one system by a suitable mechanical coupling mechanism, e. g., a cable or a collet chuck in accordance with the invention. The main body 100 generally includes a signal processing section 200, a recording/reproducing section 300 which may be detachable from the signal processing section 200 and a number of coupling sensing devices 41, 51, 61 and 71 adapted to sense the connection status of each of the separable modules 400, 500, 600 and 700 to the main body 100. As each of the separable components 400, 500, 600 and 700 is coupled to the main body 100, each of the corresponding connection sensing signals indicative of the connection status is generated from each of the corresponding coupling sensing devices 41, 51, 61 and 71.

The signal processing section 200 comprises a system controller 10 for controlling the video system and a DSP (digital signal processor) 20 connected to the system controller 10. The DSP 20 is designed to process an input signal thereto in a digital format pursuant to JPEG (Joint Photographic Experts Group) standard which is a general-purpose compression standard designed to meet the needs of continuous-tone, still-image applications and the like and which is an algorithm for coding still pictures.

A front panel controller 15 is connected to the system controller 10 and has sensing ports 42, 52, 62 and 72 to receive the coupling sensing signals generated from the coupling sensing devices 41, 51, 61 and 71, respectively. Connected to the panel controller 15 is a key matrix (not shown) having a plurality of mode selection keys thereon for allowing the video system to operate in a mode selected by any one of the mode selection keys.

The recording/reproducing section 300 has a servo controller 30 connected to the system controller 10, a motor 32 under the control of the servo controller 30, a pair of recording and reproducing heads 34 and 36, an encoder 38 connected to the input of the recording head 34, a detector 40 connected to the output of the reproducing head 36. In case where the recording/reproducing section 300 is connected to the main body 100, an output signal from the DSP 20 is provided through a terminal 14 to the encoder 38 in the recording/reproducing section 300 for the recording thereof. The encoder 38 encodes the output signal from the DSP 20 to produce a PCM (pulse code modulated) signal which is obtained by performing a sampling operation on the output video signal from the DSP 20. The PCM signal is then recorded on a recording medium such as a magnetic tape 18 through the use of the recording head 34. On the other hand, during the reproducing operation, a video signal recorded on the recording medium 18 is reproduced by the reproducing head 36. The reproduced video signal, however, is of the PCM signal which may be a differentiated signal. Therefore, the reproduced PCM signal is subjected to an integration process by the detector 40 which may be an integration circuit. The output of the detector 40 is provided to a decoder 48. The decoder 48 decodes the output video signal and provides the decoded video signal to the DSP 20 through a terminal 16.

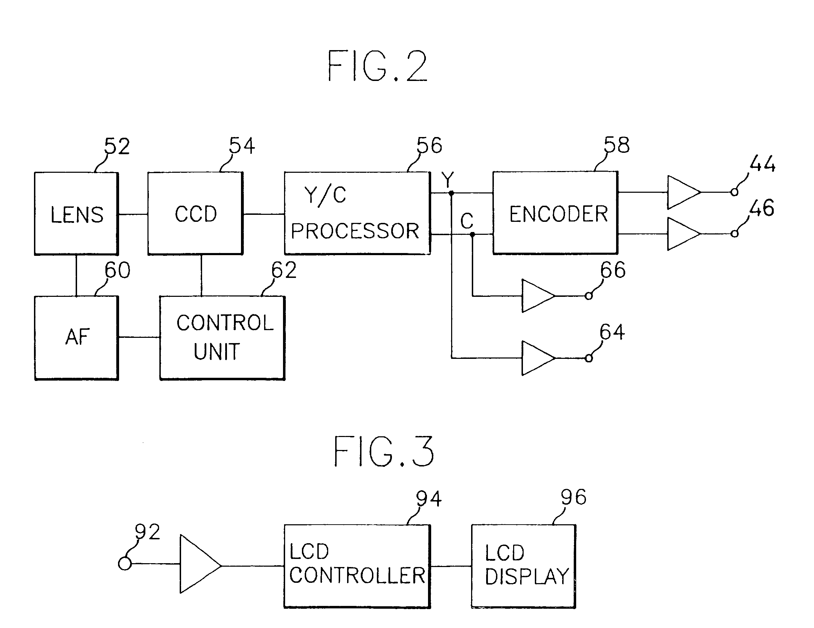

Fig. 2 shows a block diagram of the video camera module 400 shown in Fig. 1. An auto-focusing ("AF") circuit 60 serves to increase or decrease the aperture size and the exposure of a lens 52 under the control of a control unit 62. The lens 52 functions to focus an optical image of an object onto an image pickup element such as a charge coupled device ("CCD") 54. The CCD 54 is scanned by the control unit 62 to form a video signal in a digital form. The digital video signal is supplied to a Y/C (luminance/chrominance) processor 56. In the Y/C processor 56, the digital video signal is subjected to a digital processing such as gamma correction and separated into a luminance signal "Y" and a chrominance signal "C". Both of the luminance signal Y and the chrominance signal C are supplied to an encoder 58 and the signal processing section 200 through Y and C input terminals 64 and 66 in the signal processing section 200. The encoder 58 serves to combine the luminance signal Y and the chrominance signal C to produce a composite video signal or a radio frequency ("RF") modulated video signal by modulating the composite video signal. The composite video signal is provided through a LINE input terminal 44 to the signal processing section 200 or the monitor module 600 and the RF modulated signal may be provided through a terminal 46 to another video system such as a television set or a video cassette recorder.

The camera module 400 may be combined to the main body 100 through the use of a conventional cable connection or a mechanical connector such as a hot shoe. When the combination status is achieved, the coupling sensing device 41 signals the connection status to the panel controller 15 through the input port 42. At this time, the video signal through the LINE input terminal 44 from the camera module 400 is supplied to an ADC (analog to digital converter) 82 which performs an analog-to-digital conversion. The digitized video signal by the ADC 82 is applied to a Y/C processor 86. The Y/C processor 86 combines the digitized video signal with the Y and C signals via the terminal 64 and 66 from the camera module 400 and encodes the combined video signal. Thereafter, the encoded signal by the Y/C processor 86 is supplied to the DSP 20 for the processing thereof.

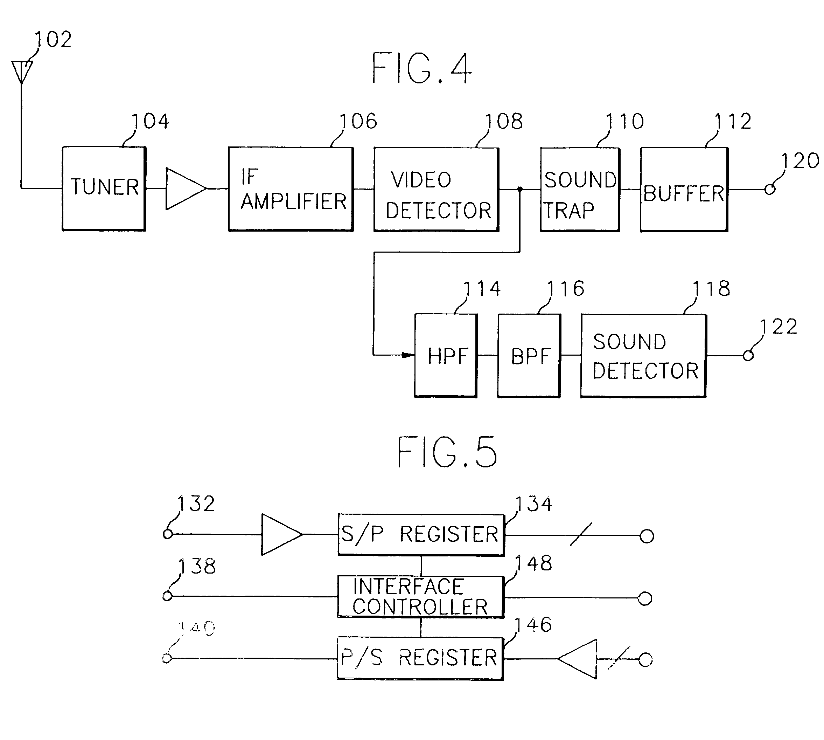

Fig. 3 shows a block diagram of the monitor module 600 shown in Fig. 1. The monitor module 600 may be connected to the main body 100 by a conventional cable connection. When the connection is made, the coupling sensing device 61 signals the connection status to the panel controller 15 through the input port 62. At this time, the output video signal from the DSP 20 is supplied via a DAC (digital-to-analog converter) 90 to the monitor module 600. A liquid crystal display ("LCD") controller 94 receives through an input terminal 92 the video signal which is converted into an analog form by the DAC 90. In the LCD controller 94, the analog video signal is subjected to a signal format conversion process to produce a converted video signal capable of being displayed on a LCD display 96. On the other hand, the monitor module 600 may be directly coupled to the camera module 400 through a mechanical coupling device such as a collet chuck in order to display the composite video signal provided through the terminal 46 in the camera module 400.

Fig. 4 shows a block diagram of the tuner module 500 shown in Fig. 1. A radio frequency ("RF") tuner 104 receives an external broadcasting signal through a receiving antenna 102 and converts it to an intermediate frequency (IF) signal with a single band of frequencies. The converted IF signal is supplied to an IF amplifier and divided into an IF video signal and an IF audio signal. A video detector 108 receives the IF video and audio signals and provides a baseband video signal and a baseband audio signal to a sound trap circuit 110 and a series of a high pass filter ("HFP") 114 and a band pass filter ("BPF") 116, respectively. The sound trap circuit 110 extracts a remaining sound signal component from the baseband video signal and supplies the baseband video signal to the main body 100 via a buffer 112. On the other hand, the baseband audio signal is converted to a sound signal with an appropriate audio band while passing the series of the HPF 114 and the BPF 116 and supplied to a sound detector 118. And then, the output of the sound detector 118 is provided to the main body 100 through a terminal 122.

The tuner module 500 is connected to the main body 100 through the use of a mechanical coupling device such as a collet chuck so that the video and the audio signals are collectively provided to the main body 100 through the collet chuck. When the tuner module 500 is connected to the main body 100, the coupling sensing device 51 signals the connection status of the tuner module 500 to the main body 100 to the panel controller 15 through the input port 52. At this time, the video signal through the terminal 120 from the tuner 500 is supplied to an ADC 124 which performs an analog-to-digital conversion and then a Y/C processor 126. The Y/C processor 126 performs a Y/C signal processing on the digital video signal converted from the ADC 124 and then encodes the same. The output of the Y/C processor 126 is provided to the DSP 20 for the processing thereof. At the same time, the audio signal from the tuner module 500 is supplied through a low pass filter ("LPF") 128 to an ADC 130 for its conversion into a digital form. The converted digital audio signal is then applied to the DSP 20 for the processing thereof. The processed video and audio signals by the DSP 20 may be supplied to the recording/reproducing section 300 for the recording thereof or provided to the monitor module 600 for displaying thereof.

Fig. 5 shows a block diagram of the external digital signal processing system interface module 700 which may be coupled by a conventional cable connection to the main body 100. The external digital signal processing system interface module 700 is used to allow the recording/reproducing section 300 to be employed as an auxiliary storage device of an external digital signal processing system such as a personal computer ("PC") (not shown). The PC interface module 700 includes a serial/parallel (S/P) register 134, a parallel/serial (P/S) register 146 and an interface controller 148 which is connected through a terminal 138 between the system controller 10 in the main body 100 and a CPU (central processing unit) or a SCSI (small computer system interface) which is employed in the PC. The interface controller 148 serves to perform the timing control, i. e., the synchronization of the signal processing section 200 in the main body 100 to the PC in order to insure the communication between main body 100 and the PC and controls the data conversion process to be performed in the registers 134 and 146. The S/P register 134 permits the output signal from the DSP 20 to convert a serial data format into a parallel data format while the P/S register 146 permits the output signal from the PC to change from a parallel data format into a serial data format. The converted parallel or serial signal is provided to the PC or the DSP 20 under the control of the interface controller 148, respectively.

While the present invention has been shown and described with respect to the preferred embodiments, it will be apparent to those skilled in the art that many changes and modifications may be made without departing from the scope of the invention as defined in the appended claims.

## Claims

1. A video system comprising:
a main body having a signal processing section, a recording/reproducing section and a coupling means; and
a plurality of independent modules said plurality comprising a camera module, a display module, a tuner module, and an external digital signal processing system interface module which can all at the same time be separably engaged with the main body through the coupling means, the camera module providing a camera video signal to the signal processing section, the tuner module providing a broadcast video signal to the signal processing section, the interface module providing a digital data signal to the signal processing section and the display module displaying an output video signal provided from the signal processing section,
wherein the signal processing section includes:
a system controller for controlling the video system;
a coupling sensing means connected to the system controller for detecting the connection status of each of the modules to the main body through the coupling means; and
a signal processing means connected to the system controller for processing an input signal provided to the signal processing section in a digital form to produce the output signal.

2. The video system of claim 1, wherein the recording/reproducing section includes:
an encoder for encoding the output signal provided from the signal processing means to produce an encoded signal for the recording thereof;
a recording/reproducing means for recording the encoded signal from the encoder on a recording medium and reproducing a prerecorded signal on the recording medium;
a detector for performing an integration process for the reproduced prerecorded signal to produce a digitized signal; and
a decoder for decoding the digitized signal from the detector to produce and send a decoded signal which constitutes the input signal to the signal processing means.

## Patentansprüche

1. Videosystem, das umfaßt:
einen Hauptkörper mit einem Signalverarbeitungsabschnitt, einem Aufnahme-/Wiedergabeabschnitt und einem Kopplungsmittel; und
eine Vielzahl unabhängiger Module, wobei diese Vielzahl ein Kameramodul, ein Anzeigemodul, ein Tuner-Modul und ein Systeminterface-Modul zum Verarbeiten externer Digitalsignale umfaßt, die alle gleichzeitig trennbar mit dem Hauptkörper über das Kopplungsmittel verbunden sein können, wobei das Kameramodul dem Signalverarbeitungsabschnitt ein Kamera-Videosignal liefert, das Tuner-Modul dem Signalverarbeitungsabschnitt ein Übertragungsvideosignal liefert, das Interface-Modul dem Signalverarbeitungsabschnitt ein Digitaldatensignal liefert und das Anzeigemodul ein von dem Signalverarbeitungsabschnitt geliefertes Ausgangsvideosignal anzeigt,
wobei der Signalverarbeitungsabschnitt aufweist:
eine Systemsteuerung zum Steuern des Videosystems;
ein Kopplungserfassungsmittel, das mit der Systemsteuerung zum Erfassen des Verbindungstatus jedes Moduls mit dem Hauptkörper durch das Kopplungsmittel verbunden ist; und
ein Signalverarbeitungsmittel, das mit der Systemsteuerung zum Verarbeiten eines dem Signalverarbeitungsabschnitt in digitaler Form gelieferten Eingangssignals verbunden ist, um das Ausgangssignal zu erzeugen.

2. Videosystem nach Anspruch 1, bei welchem der Aufnahme-/Wiedergabeabschnitt aufweist:
einen Kodierer zum Kodieren des von dem Signalverarbeitungsmittel gelieferten Ausgangssignals, um ein kodiertes Signal für dessen Aufnahme zu erzeugen;
ein Aufnahme-/Wiedergabemittel zum Aufnehmen des kodierten Signals von dem Kodierer auf einem Aufnahmemedium und zum Wiedergeben eines bereits aufgenommenen Signals auf dem Aufnahmemedium;
einen Detektor zum Durchführen eines Integrationsprozesses für das reproduzierte bereits aufgenommene Signal, um ein digitalisiertes Signal zu erzeugen; und
einen Dekodierer zum Dekodieren des digitalisierten Signals von dem Detektor, um ein dekodiertes Signal zu erzeugen und zu senden, welches das Eingangssignal an das Signalverarbeitungsmittel bildet.

## Revendications

1. Système vidéo comprenant :
un corps principal présentant une section de traitement de signal, une section d'enregistrement/lecture et des moyens de couplage ; et
une pluralité de modules indépendants, ladite pluralité comprenant un module de caméra, un module d'affichage, un module de syntoniseur et un module d'interface de système de traitement de signal numérique externe qui peuvent tous simultanément être mis en prise séparément avec le corps principal par le biais des moyens de couplage, le module de caméra délivrant un signal vidéo de caméra à la section de traitement de signal, le module de syntoniseur délivrant un signal vidéo de diffusion à la section de traitement de signal, le module d'interface délivrant un signal de données numérique à la section de traitement de signal et le module d'affichage affichant un signal vidéo de sortie délivré par la section de traitement de signal,
dans lequel la section de traitement de signal comprend :
un régisseur de système permettant de commander le système vidéo ;
des moyens de détection de couplage connectés au régisseur de système afin de détecter l'état de chacun des modules connectés au corps principal par l'intermédiaire des moyens de couplage ; et
des moyens de traitement de signal connectés au régisseur de système afin de traiter un signal d'entrée délivré à la section de traitement de signal sous une forme numérique afin de produire le signal de sortie.

2. Système vidéo selon la revendication 1, dans lequel la section d'enregistrement/lecture comprend :
un codeur pour coder le signal de sortie délivré par les moyens de traitement de signal afin de produire un signal codé pour son enregistrement ;
des moyens d'enregistrement/lecture pour enregistrer le signal codé par le codeur sur un support d'enregistrement et lire un signal préenregistré sur le support d'enregistrement ;
un détecteur permettant de réaliser un processus d'intégration pour le signal préenregistré lu afin de produire un signal numérisé ; et
un décodeur permettant de décoder le signal numérisé par le détecteur afin de produire et de transmettre un signal codé qui constitue le signal d'entrée aux moyens de traitement de signal.
